# EUROPÄISCHE PATENTSCHRIFT

(11) **EP 1 121 217 B1**
(45) Veröffentlichungstag und Bekanntmachung des Hinweises auf die Patenterteilung: **11.08.2004**
(21) Anmeldenummer: 99970042.0
(22) Anmeldetag: 29.09.1999
(51) Int. Cl.: B23D 15/00, B23D 15/06

(54) **VORRICHTUNG UND VERFAHREN ZUM HERSTELLEN VON PLATINEN**
DEVICE AND METHOD FOR PRODUCING PLATES
DISPOSITIF ET PROCEDE DE PRODUCTION DE PLATINES

(30) Priorität: 05.10.1998 DE 19845599
(43) Veröffentlichungstag der Anmeldung: 08.08.2001
(73) Patentinhaber: Schuler Automation GmbH & Co. KG, 91093 Hessdorf (DE)
(72) Erfinder: VOGEL, Norbert, D-91088 Bubenreuth (DE); JAKOB, Wilfried, D-30916 Isernhagen (DE)
(74) Vertreter: Gassner, Wolfgang, Dr.
(86) Internationale Anmeldenummer: PCT/DE1999/003127
(87) Internationale Veröffentlichungsnummer: WO 2000/020152

(56) Entgegenhaltungen:
- DE-A- 2 023 480
- US-A- 4 022 088

## Beschreibung

Die Erfindung betrifft eine Vorrichtung und ein Verfahren zum Herstellen von Platinen.

Nach dem Stand der Technik werden zur Herstellung einfach geformter Platinen so genannte Scheren verwendet. Die Platinen können z. B. rechteckig oder trapezförmig geformt sein. Zur Herstellung der entsprechenden Schnitte wird ein oberes Querhaupt mechanisch gegen ein unteres Querhaupt verfahren.

Zur Herstellung größerer Platinen mit Konturen werden mechanische Schneidpressen verwendet. Solche mechanischen Schneidpressen sind z. B. aus der DE 34 18 432 C2 oder der DE-OS 1 552 733 bekannt. Dabei wird zur Erzeugung des Schnitts ein Stößel gegen einen Tisch bewegt.

Sowohl Scheren als auch mechanische Schneidpressen arbeiten üblicherweise mit einem konstanten Hub. Sie können mit einer hohen Hubzahl betrieben werden.

Die DE-A-2 023 480 beschreibt eine Schere, bei der ein oberes Querhaupt mittels einer Exzenterwelle gegen eines unteres Querhaupt verfahrbar ist. Das obere und das untere Querhaupt sind als Messerhalter ausgebildet. Die daran aufgenommenen Messer sind in einem Scherengestell aufgenommen, welches insgesamt austauschbar ist.

Außerdem bekannt sind hydraulische Pressen. Der Hub von hydraulischen Pressen ist ohne weiteres einstellbar. Sie werden zum Umformen von Blechen benutzt. Hydraulische Pressen können bei entsprechender Werkzeugbestückung auch als Schneidpressen eingesetzt werden.

Gleichwohl werden mechanische Schneidpressen besonders wegen ihrer hohen Hubzahl in der Praxis bevorzugt. Dabei wird verkannt, dass insbesondere bei der Herstellung großer Platinen die tatsächlich realisierbare Hubzahl derartiger Schneidpressen mit der von hydraulischen Schneidpressen vergleichbar ist.

Eine mit einer mechanischen Schneidpresse ausgestattete Schneidlinie weist insbesondere dann einen relativ geringen Ausstoß auf, wenn eine Vielzahl von Platinen unterschiedlicher Größe und Geometrie herzustellen sind. In diesem Fall bedient man sich üblicherweise mehrerer Schneidlinien, wobei zumindest eine davon mit einer Schere und eine weitere mit einer mechanischen Schneidpresse ausgestattet ist. - Das Vorsehen mehrerer Schneidlinien erfordert einen hohen Kostenund Platzaufwand. Es ist erforderlich, zu jeder der Schneideinrichtungen eine Einrichtung zum Zuführen eines Blechbands und eine Einrichtung zum Abführen der in der Schneidvorrichtung hergestellten Blechplatinen vorzusehen.

Aufgabe der Erfindung ist es, die Nachteile nach dem Stand der Technik zu beseitigen. Es sollen insbesondere eine Vorrichtung und ein Verfahren zum Herstellen von Platinen angegeben werden, mit denen auf einfache Weise Platinen unterschiedlicher Größe und Geometrie mit einem hohen Ausstoß in einer Schneidlinie herstellbar sind.

Diese Aufgabe wird durch die Merkmale der Ansprüche 1 und 13 gelöst. Zweckmäßige Ausgestaltungen ergeben sich aus den Merkmalen der Ansprüche 2 bis 12 und 14 bis 21.

Nach Maßgabe der Erfindung ist eine Vorrichtung zum Herstellen von Platinen vorgesehen mit
einer hydraulischen Presse, bei der zwischen einem Tisch und einem in vom Tisch entfernter Position stehendem Stößel ein Arbeitsraum gebildet ist, und
einer auf einem Schiebetisch aufgenommenen als verschiebbares Modul ausgeführten Schneideinrichtung zum Schneiden von Blech, die eine Antriebseinrichtung zur Durchführung einer Hubbewegung mindestens eines Querhaupts aufweist und so dimensioniert ist, daß sie im Arbeitsraum aufnehmbar ist.

Die Schneideinrichtung kann in einen zwischen einem Tisch und einem in vom Tisch entfernter Position stehenden Stößel gebildeten Arbeitsraum einer hydraulischen Presse gebracht werden. So können innerhalb einer einzigen Schneidlinie wirtschaftlich Platinen unterschiedlicher Größe und Ausgestaltung hergestellt werden. Zur Herstellung großer Platinen mit Kontur wird die hydraulische Presse mit einem entsprechenden Schneidwerkzeug ausgestattet. Zur Herstellung kleiner Platinen mit einfacher Form ist es möglich, das Schneidwerkzeug aus der hydraulischen Presse herauszunehmen, durch Verfahren des Stößels in eine vom Tisch entfernte Position einen Arbeitsraum zu schaffen und in diesen Arbeitsraum die Schneideinrichtung zu bringen. Die Schneideinrichtung ermöglicht die Herstellung einfach geformter Platinen mit einer hohen Hubzahl. Das Vorsehen zweier Schneidlinien ist nicht erforderlich. Es wird eine erhebliche Kosteneinsparung erzielt.

Vorteilhafterweise ist das Querhaupt ein oberes eine erste Schneidkante aufweisendes Querhaupt, wobei das obere Querhaupt gegen ein unteres eine zweite Schneidkante aufweisendes Querhaupt verfahrbar ist; das obere Querhaupt ist zweckmäßigerweise über zwei Pleuel mit einer Exzenterwelle verbunden. Die Exzenterwelle kann Bestandteil einer Antriebseinrichtung sein, und das untere Querhaupt kann zwischen der Antriebseinrichtung und dem oberen Querhaupt angeordnet sein. Eine solche Vorrichtung ist besonders kompakt aufgebaut.

Als besonders vorteilhaft wird es angesehen, dass die Antriebseinrichtung und die Schwenkvorrichtung jeweils einen Hydraulikantrieb aufweisen. So kann die in der hydraulischen Presse bereits vorhandene Kraftquelle genutzt werden.

Nach einem weiteren Ausgestaltungsmerkmal ist eine Schwenkvorrichtung zum gemeinsamen Verschwenken eines oberen und unteren Querhaupts um eine parallel zur Schneidbewegungsrichtung des oberen Querhaupts gerichtete Achse vorgesehen. Das ermöglicht die Herstellung von trapezförmig ausgebildeten Platinen. Die Schneidkanten können nicht nur gerade, sondern auch gekrümmt ausgebildet sein. Das ermöglicht auch die Herstellung von bogenförmigen Schnitten.

Die Schwenkvorrichtung ist zweckmäßigerweise im Schiebetisch aufgenommen, wobei ferner eine Einrichtung zum automatischen Steuern der von der Schwenkvorrichtung ausgeführten Schwenkbewegungen vorgesehen sein kann. Das erste Merkmal erleichtert die Handhabung, das zweite Merkmal die Fertigungsgenauigkeit.

Zweckmäßigerweise ist eine Einrichtung zum Zuführen eines Blechbands zum Arbeitsraum und/oder eine Einrichtung zum Abführen vom Blechplatinen vom Arbeitsraum vorgesehen. Dadurch kann die Herstellungsgeschwindigkeit weiter erhöht werden.

Der Schiebetisch kann auf einem quer zur Transportrichtung des Blechbands verlaufenden und in den Arbeitsraum reichenden Schienenweg aufgenommen sein. Das erleichtert das Ein- und Ausbringen der Schneideinrichtung in bzw. aus dem Arbeitsraum.

Die Schneideinrichtung kann nach einem weiteren Ausgestaltungsmerkmal eine Kupplung zum Anschluss an eine Hydraulikeinrichtung der hydraulischen Presse aufweisen. So kann die in der hydraulischen Presse bereits vorhandene Kraftquelle genutzt werden.

Nach der verfahrensseitigen Erfindung ist ein Verfahren zum Herstellen von Platinen mit einer hydraulischen Presse vorgesehen, bei der zwischen einem Tisch und einem in vom Tisch entfernter Position stehendem Stößel ein Arbeitsraum gebildet ist, wobei
a) zum Herstellen von Platinen einer ersten vorgegebenen Art der Stößel und der Tisch jeweils mit einem Schneidwerkzeug bestückt werden, und
b) zum Herstellen von Platinen einer zweiten vorgegebenen Art das Schneidwerkzeug aus der hydraulischen Presse entfernt und eine auf einem Schiebetisch aufgenommene Schneideinrichtung in den Arbeitsraum eingebracht wird, wobei die Schneideinrichtung eine Antriebseinrichtung zur Durchführung der Hubbewegung mindestens eines Querhaupts aufweist.

Bei Platinen der ersten vorgegeben Art handelt es sich insbesondere um solche, die eine geschlossene Kontur aufweisen oder deren Herstellung eine große Vorschublänge erfordert. Platinen der zweiten vorgegeben Art können vorzugsweise mittels Trennschnitten und bei kleiner Vorschublänge hergestellt werden. - Das erfindungsgemäße Verfahren ermöglicht auf einfache Weise die Herstellung von Platinen unterschiedlicher Größe und Geometrie mit einem hohen Ausstoß in einer einzigen Schneidlinie.

Zum Herstellen von Platinen der zweiten vorgegebenen Art kann ein oberes eine erste Schneidkante aufweisendes Querhaupt gegen ein unteres eine zweite Schneidkante aufweisendes Querhaupt verfahren werden.

Vorteilhafterweise ist das Schneidwerkzeug auf einem weiteren Schiebetisch aufgenommen, wobei zum Austausch der Schneideinrichtung gegen das Schneidwerkzeug der Schiebetisch und der weitere Schiebetisch verfahren werden. Das ermöglicht ein besonders rasches Umrüsten. Wegen der Anordnung der Schneideinrichtung im Arbeitsraum der hydraulischen Presse ist es nicht erforderlich, separate Transporteinrichtungen zum Zuführen des Blechbands bzw. zum Abführen der hergestellten Platinen vorzusehen. Es können die für die hydraulische Presse vorhandenen Zu- bzw. Abführeinrichtungen benutzt werden.

Nachfolgend wird ein Ausführungsbeispiel anhand der Zeichnung näher erläutert. Hierin zeigen:
- Fig. 1: eine Seitenansicht einer hydraulischen Presse mit Schneideinrichtung,
- Fig. 2: eine Seitenansicht gemäß Fig. 1 ohne Schneideinrichtung,
- Fig. 3: eine schematische Querschnittsansicht gemäß Fig. 1,
- Fig. 4: eine schematische Querschnittsansicht gemäß Fig. 2 und

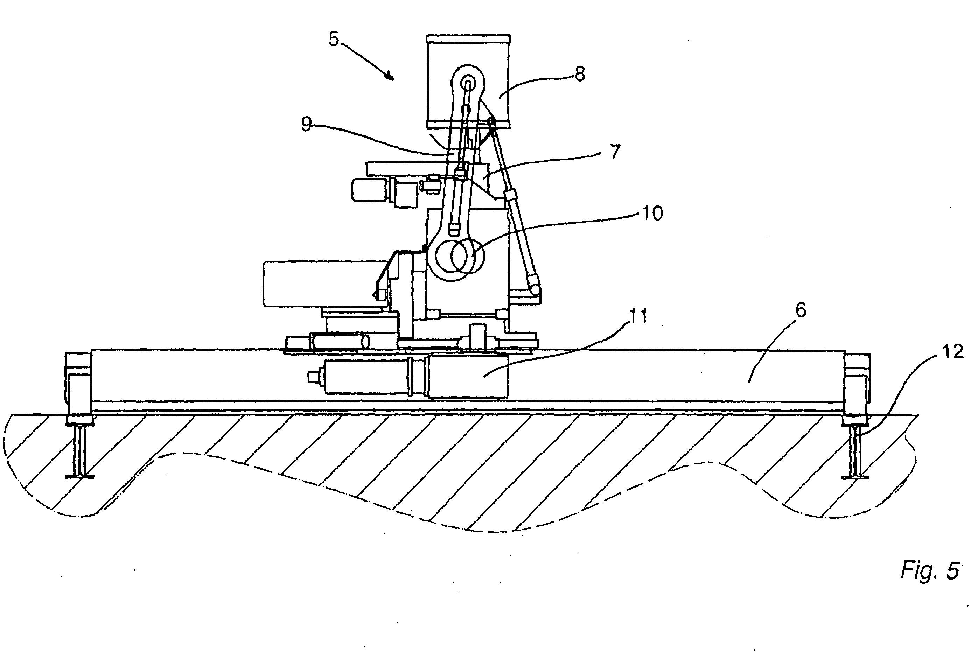

- Fig. 5: eine Vorrichtung in Seitenansicht.

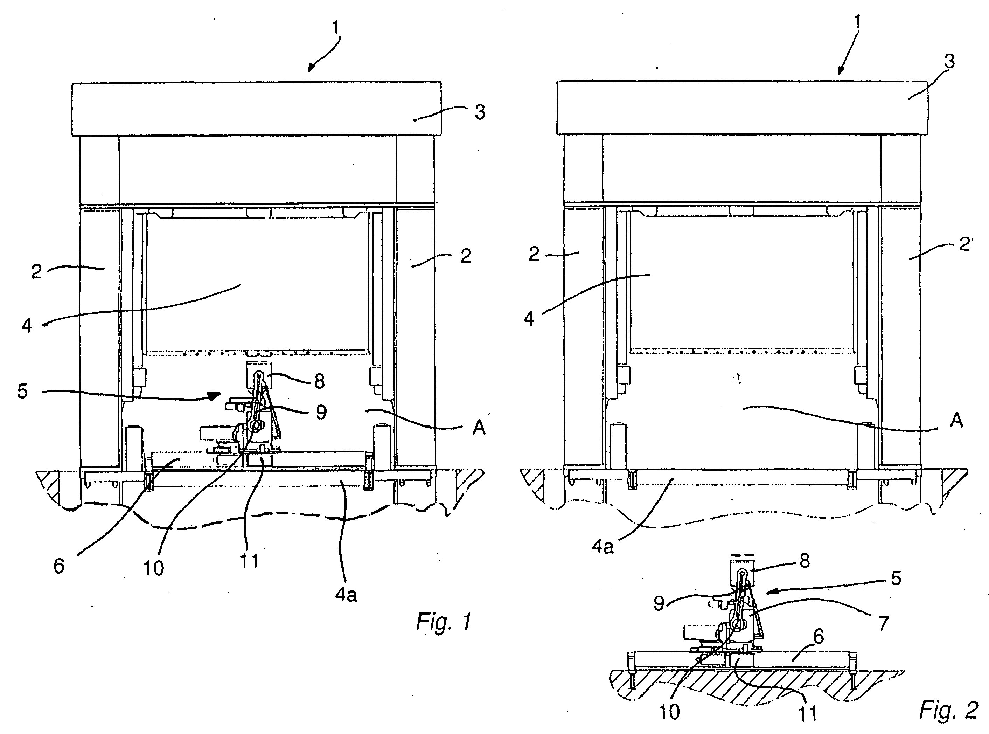

In den Fig. 1 bis 4 weist eine allgemein mit dem Bezugszeichen 1 bezeichnete hydraulische Presse ein auf vier Säulen 2 getragenes Kopfstück 3 auf. Am Kopfstück 3 ist ein hydraulisch verfahrbarer Stößel 4 angebracht. Der Stößel 4 befindet sich in einer vom Tisch 4a entfernten bzw. zurückgefahrenen Stellung nahe dem Kopfstück 3. Der Stößel 4 und der Tisch 4a sind hier nicht mit einem Schneidwerkzeug bestückt. Zwischen dem in zurückgefahrener Position befindlichen Stößel 4 und dem Tisch 4a ist ein Arbeitsraum A gebildet.

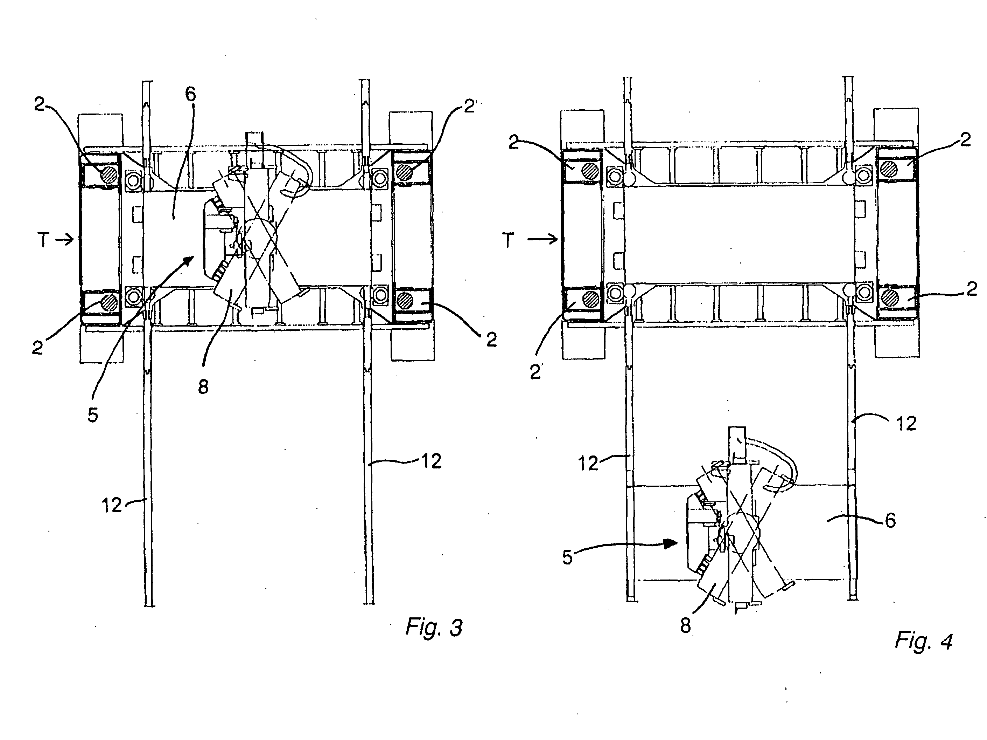

In den Fig. 1 und 3 ist eine mit einer (hier nicht gezeigten) Antriebseinrichtung versehene Schere bzw. Schneideinrichtung 5 auf einem Schiebetisch 6 aufgenommen. Die zwischen einem unteren Querhaupt 7 und dem Schiebetisch 6 vorgesehene Antriebseinrichtung kann einen elektrisch oder hydraulisch betreibbaren Motor aufweisen. Die Verwendung eines hydraulisch betreibbaren Motors ist deshalb vorteilhaft, weil dann als Kraftquelle eine Hydraulikeinrichtung der hydraulischen Presse 1 genutzt werden kann.

Ein oberes Querhaupt 8 ist über zwei Pleuel 9 mit einer Exzenterwelle 10 verbunden. Der Exzenterwelle 10 ist Bestandteil einer Antriebseinrichtung. Durch eine Rotation der Exzenterwelle 10 ist das obere Querhaupt 8 mechanisch gegen das untere Querhaupt 7 verfahrbar.

Im Schiebetisch 6 befindet sich eine Schwenkvorrichtung 11. Auch die Schwenkvorrichtung 11 kann eine elektrisch oder hydraulisch betreibbare Antriebseinrichtung, z. B. einen Elektromotor oder Hydraulikzylinder, aufweisen. Sie ist mittels einer (hier nicht dargestellten) Steuerungseinrichtung automatisch steuerbar. - Der Schiebetisch 6 ist entlang eines Schienenwegs 12 verfahrbar. Der Schienenweg 12 verläuft quer zu einer Transportrichtung T des (hier nicht gezeigten) Blechbands; er reicht in den Arbeitsraum A.

### Die Funktion der Vorrichtung ist folgende:

Zum Schneiden großer oder eine geschlossene Kontur aufweisender Blechteile wird ein quer zum Schienenweg 12 durch die hydraulische Presse 1 entlang des Transportwegs T zugeführtes (hier nicht dargestelltes) Blechband mittels eines am Stößel 4 bzw. auf dem Tisch 4a aufgenommenen Schneidwerkzeugs geschnitten. Die geschnittenen Platinen werden mit einer herkömmlichen Vorrichtung vom Arbeitsraum A weggeführt und gestapelt.

Zum Schneiden kleiner oder mittlerer Platinen kann das Schneidwerkzeug mittels eines weiteren Schiebetischs aus der hydraulischen Presse 1 herausgefahren und statt dessen der Schiebetisch 6 in den Arbeitsraum A der hydraulischen Presse 1 gefahren werden. Die z. B. hydraulisch betreibbare Antriebseinrichtung und ggf. Schwenkvorrichtung 11 werden mit der Hydraulikeinrichtung der hydraulischen Presse 1 mittels einer Kupplung verbunden. Anschließend wird das Blechband zwischen dem oberen 8 und dem unteren Querhaupt 7 hindurchgeführt. Das Blechband wird durch eine Schneidbewegung einer am oberen Querhaupt 8 befestigten ersten und einer am unteren Querhaupt 7 vorgesehenen zweiten Schneidkante z. B. in rechteckige Platinen geschnitten. Durch eine jeweils vor dem Schnitt mittels der Schwenkeinrichtung 11 erfolgende Schwenkbewegung der Schneidvorrichtung 5 können auch trapezförmige Platinen hergestellt werden.

Die Kombination der als verschiebbares Modul ausgeführten Schneideinrichtung 5 mit der hydraulischen Presse 1 ermöglicht die Einrichtung einer besonders universellen Schneidlinie. Darin können unter Verwendung der Schneideinrichtung 5 kleine und mittlere Platinen mit einer hohen Hubzahl hergestellt werden. Große oder eine geschlossene Kontur aufweisende Platinen können unter Verwendung eines als weiteres Modul vorgesehenen Schneidwerkzeugs mittels der hydraulischen Presse 1 gefertigt werden. Die vorgeschlagene Vorrichtung lässt sich in kurzer Zeit umrüsten. Es können die Zu- und Abführeinrichtungen für das Blechband bzw. die Platinen ohne Änderung verwendet werden.

### Bezugszeichenliste

- 1: hydraulische Presse
- 2: Säule
- 3: Kopfteil
- 4: Stößel
- 4a: Tisch
- 5: Schneideinrichtung
- 6: Schiebetisch
- 7: unteres Querhaupt
- 8: oberes Querhaupt
- 9: Pleuel
- 10: Exzenterwelle
- 11: Schwenkvorrichtung
- 12: Schienenweg
- A: Arbeitsraum
- T: Transportrichtung

## Patentansprüche

1. Vorrichtung zum Herstellen von Platinen mit
einer hydraulischen Presse (1), bei der zwischen einem Tisch (4a) und einem in vom Tisch (4a) entfernter Position stehendem Stößel (4) ein Arbeitsraum (A) gebildet ist, und
einer auf einem Schiebetisch (6) aufgenommenen als verschiebbares Modul ausgeführten Schneideinrichtung (5) zum Schneiden von Blech, die eine Antriebseinrichtung zur Durchführung einer Hubbewegung mindestens eines Querhaupts (7, 8) aufweist und so dimensioniert ist, daß sie im Arbeitsraum (A) aufnehmbar ist.

2. Vorrichtung nach Anspruch 1, wobei das Querhaupt ein eine erste Schneidkante aufweisendes oberes Querhaupt ist und wobei das obere Querhaupt (8) gegen ein eine zweite Schneidkante aufweisendes unteres Querhaupt (7) verfahrbar ist.

3. Vorrichtung nach Anspruch 2, wobei das obere Querhaupt (8) über zwei Pleuel (9) mit einer Exzenterwelle (10) verbunden ist.

4. Vorrichtung nach einem der vorhergehenden Ansprüche, wobei die Exzenterwelle (10) Bestandteil der Antriebseinrichtung ist und das untere Querhaupt (7) zwischen der Antriebseinrichtung und dem oberen Querhaupt (8) angeordnet ist.

5. Vorrichtung nach einem der vorhergehenden Ansprüche, wobei eine Schwenkvorrichtung (11) zum gemeinsamen verschwenken des oberen (8) und unteren Querhaupts (7) um eine parallel zur Schneidbewegungsrichtung des oberen Querhaupts (8) gerichtete Achse vorgesehen ist.

6. Vorrichtung nach einem der vorhergehenden Ansprüche, wobei die Schwenkvorrichtung (11) im Schiebetisch (6) aufgenommen ist.

7. Vorrichtung nach einem der vorhergehenden Ansprüche, wobei die Antriebseinrichtung und die Schwenkvorrichtung (11) jeweils einen Hydraulikantrieb aufweisen.

8. Vorrichtung nach einem der vorhergehenden Ansprüche, wobei eine Einrichtung zum automatischen Steuern der von der Schwenkvorrichtung (11) ausgeführten Schwenkbewegungen vorgesehen ist.

9. Vorrichtung nach einem der vorhergehenden Ansprüche, wobei eine Einrichtung zum Zuführen eines Blechbands zum Arbeitsraum (A) vorgesehen ist.

10. Vorrichtung nach einem der vorhergehenden Ansprüche , wobei eine Einrichtung zum Abführen von Blechplatinen vom Arbeitsraum (A) vorgesehen ist.

11. Vorrichtung nach einem der Ansprüche vorhergehenden Ansprüche, wobei der Schiebetisch (6) auf einem quer zur Transporteinrichtung (T) des Blechbands verlaufenden und in den Arbeitsraum (A) reichenden Schienenweg (12) aufgenommen ist.

12. Vorrichtung nach einem der vorhergehenden Ansprüche , wobei die Schneideinrichtung eine Kupplung zum Anschluß an eine Hydraulikeinrichtung der hydraulischen Presse (1) aufweist.

13. Verfahren zum Herstellen von Platinen mit einer hydraulischen Presse (1), bei der zwischen einem Tisch (4a) und einem in vom Tisch (4a) entfernter Position stehendem Stößel (4) ein Arbeitsraum (A) gebildet ist, wobei
a) zum Herstellen von Platinen einer ersten vorgegebenen Art der Stößel (4) und der Tisch (4a) jeweils mit einem Schneidwerkzeug bestückt werden, und
b) zum Herstellen von Platinen einer zweiten vorgegebenen Art das Schneidwerkzeug aus der hydraulischen Presse (1) entfernt und eine auf einem Schiebetisch (6) aufgenommene Schneideinrichtung (5) in den Arbeitsraum (A) gebracht wird, wobei die Schneideinrichtung (5) eine Antriebseinrichtung zur Durchführung der Hubbewegung mindestens eines Querhaupts (7, 8) aufweist.

14. Verfahren nach Anspruch 13, wobei zum Herstellen von Platinen der zweiten vorgegebenen Art ein oberes eine erste Schneidkante aufweisendes Querhaupt (8) gegen ein unteres eine zweite Schneidkante aufweisendes Querhaupt (7) verfahren wird.

15. Verfahren nach Anspruch 13 oder 14, wobei das obere Querhaupt (8) über zwei mit einer Exzenterwelle (10) verbundene Pleuel (9) verfahren wird.

16. Verfahren nach einem der Ansprüche 13 bis 15, wobei die Exzenterwelle (10) Bestandteil der Antriebseinrichtung ist und das untere Querhaupt (7) zwischen der Antriebseinrichtung und dem oberen Querhaupt (8) angeordnet ist.

17. Verfahren nach einem der Ansprüche 13 bis 16, wobei vor einem durch das Verfahren des oberen Querhaupts (8) bedingten Schnitt das obere (8) und das untere Querhaupt (7) gemeinsam um eine parallel zur Schneidbewegungsrichtung des oberen Querhaupts (8) gerichtete Achse verschwenkt werden.

18. Verfahren nach einem der Ansprüche 14 bis 17, wobei die Antriebseinrichtung und/oder die Schwenkvorrichtung hydraulisch betrieben werden.

19. Verfahren nach einem der Ansprüche 14 bis 18, wobei die Schwenkbewegungen automatisch gesteuert werden.

20. Verfahren nach einem der Ansprüche 14 bis 19, wobei das Schneidwerkzeug auf einem weiteren Schiebetisch aufgenommen ist und wobei zum Austausch der Schneidvorrichtung (5) gegen das Schneidwerkzeug der Schiebetisch (6) und der weitere Schiebetisch verfahren werden.

21. Verfahren nach einem der Ansprüche 14 bis 20, wobei nach dem Einfahren des Schiebetischs (6) eine hydraulische Verbindung zwischen der Schneidvorrichtung (5) und einer Hydraulikeinrichtung der hydraulischen Presse (1) hergestellt wird.

## Claims

1. Device for the manufacturing of plates with
an hydraulic press (1) on which a work space (A) is created between a table (4a) and a slide positioned at a distance from the table (4a), and
a cutting device (5) designed as a slidable module and mounted on a sliding table (6) for the cutting of sheet metal which cutting device is equipped with a drive device for execution of a lifting movement of at least one stationary crosshead (7, s) and is dimensioned so that it can be contained in the work space (A).

2. Device as defined in claim 1, wherein the stationary crosshead is an upper stationary crosshead which has a first cutting edge and wherein the upper stationary crosshead (8) can be moved against a lower stationary cross head (7) which has a second cutting edge.

3. Device as defined in claim 2, wherein the upper stationary crosshead (8) is connected via two connecting rods (9) with a cam shaft (10).

4. Device as defined in one of the preceding claims, wherein the cam shaft (10) is part of the drive device and the lower stationary crosshead (7) is located between the drive device and the upper stationary crosshead (8).

5. Device as defined in one of the preceding claims, wherein a swivel device (11) for the common swiveling of the upper (8) and lower stationary crosshead (7) around an axis parallel to the cutting movement direction of the upper stationary crosshead (8).

6. Device as defined in one of the preceding claims, wherein the swiveling device (11) is located in the sliding table (6).

7. Device as defined in one of the preceding claims, wherein the drive device and the swiveling device (11) each have an hydraulic drive.

8. Device as defined in one of the preceding claims, wherein a device is provided for the automatic control of the swivel movements executed by the swiveling device (11).

9. Device as defined in one of the preceding claims, wherein a device is provided for the feeding in of a sheet metal strip to the work space (A).

10. Device as defined in one of the preceding claims, wherein a device is provided for the removal of sheet metal boards from the work space (A).

11. Device as defined in one of the claims preceding the claims, wherein the sliding table (6) is located on rails (12) which extend into the work space (A) and which run crosswise to the transport device (T) of the sheet metal strip.

12. Device as defined in one of the preceding claims, wherein the cutting device is equipped with a coupling for connection to an hydraulic device of the hydraulic press (1).

13. Method for the manufacturing of plates with an hydraulic press (1) in which a work space (A) is created between a table (4a) and a slide (4) positioned at a distance from the table (4a), wherein
for the manufacturing of plates of a first specified type, the slide (4) and the table (4a) are each provided with a cutting tool, and
for the manufacturing of plates of a second specified type, the cutting tool is removed from the hydraulic press (1) and a cutting device (5) on a sliding table (6) is placed in the work space (A), wherein the cutting device (5) is equipped with a drive device for execution of the lifting movement of at least one stationary crosshead (7, 8).

14. Method as defined in claim 13, wherein, when manufacturing plates of the second specified type, an upper stationary crosshead (8) equipped with a first cutting edge against a lower stationary crosshead (7) equipped with a second cutting edge is used.

15. Method as defined in claim 13 or 14, wherein the upper stationary crosshead (8) via two connecting rods (9) connected with a cam shaft (10) is used.

16. Method as defined in one of the claims 13 to 15, wherein the cam shaft (10) is part of the drive device and the lower stationary crosshead (7) is located between the drive device and the upper stationary crosshead (8).

17. Method as defined in one of the claims 13 to 16, wherein, prior to a cut resulting from the method of the upper stationary crosshead (8), the upper (8) and the lower stationary crosshead (7) are swiveled together around an axis parallel to the cutting movement direction of the upper stationary crosshead (8).

18. Method as defined in one of the claims 14 to 17, wherein the drive device and/or the swiveling device are operated hydraulically.

19. Method as defined in one of the claims 14 to 18, wherein the swivel movements are automatically controlled.

20. Method as defined in one of the claims 14 to 19, wherein the cutting tool is located on a further sliding table, and wherein the sliding table (6) and the further sliding table are used to exchange the cutting device (5) for the cutting tool.

21. Method as defined in one of the claims 14 to 20, wherein, after the sliding table (6) is slid in, an hydraulic connection is established between the cutting device (5) and an hydraulic device of the hydraulic press (1).

## Revendications

1. Dispositif pour la fabrication de platines avec
une presse hydraulique (1) formant une zone de travail (A) entre un plateau (4a) et un poussoir (4) éloigné du plateau (4a), et
un dispositif de découpe (5), sous forme de module coulissant, sur un plateau coulissant (6), pour découper de la tôle, présentant un dispositif d'entraînement destiné au mouvement de course d'au moins une traverse (7, 8) et dimensionné de telle façon qu'il soit logeable dans la zone de travail (A).

2. Dispositif selon la revendication 1, la traverse étant une traverse supérieure présentant une première arête de coupe et la traverse supérieure (8) étant déplaçable contre une traverse inférieure (7) présentant une deuxième arête de coupe.

3. Dispositif selon la revendication 2, la traverse supérieure (8) étant reliée à un arbre à excentrique (10) via deux bielles (9).

4. Dispositif selon l'une des revendications précédentes, l'arbre à excentrique (10) étant un élément du dispositif d'entraînement et la traverse inférieure (7) étant disposée entre le dispositif d'entraînement et la traverse supérieure (8).

5. Dispositif selon l'une des revendications précédentes, un dispositif pivotant (11) étant destiné au pivotement commun de la traverse supérieure (8) et de la traverse inférieure (7) d'un axe orienté parallèlement au sens de découpage de la traverse supérieure (8).

6. Dispositif selon l'une des revendications précédentes, le dispositif pivotant (11) étant dans le plateau coulissant (6).

7. Dispositif selon l'une des revendications précédentes, le dispositif d'entraînement et le dispositif pivotant (11) présentant respectivement un entraînement hydraulique.

8. Dispositif selon l'une des revendications précédentes, un dispositif étant destiné à la commande automatique des pivotements effectués par le dispositif pivotant (11).

9. Dispositif selon l'une des revendications précédentes, un dispositif étant destiné à l'avance d'une bande de tôle vers la zone de travail (A).

10. Dispositif selon l'une des revendications précédentes, un dispositif étant destiné à la sortie de platines pour tôles de la zone de travail (A).

11. Dispositif selon l'une des revendications précédentes, le plateau coulissant (6) étant sur un rail (12) transversal par rapport au dispositif de transport (T) de la bande de tôle et allant jusque dans la zone de travail (A).

12. Dispositif selon l'une des revendications précédentes, le dispositif de découpe présentant un couplage pour le raccordement à un dispositif hydraulique de la presse hydraulique (1).

13. Procédé pour la fabrication de platines à l'aide d'une presse hydraulique (1) formant une zone de travail (A) entre un plateau (4a) et un poussoir (4) éloigné du plateau (4a),
a) le poussoir (4) et le plateau (4a) étant respectivement équipés d'un outil de coupe pour la fabrication de platines d'un premier type défini et,
b) l'outil de coupe étant retiré de la presse hydraulique (1) et un dispositif de découpe (5), sur un plateau coulissant (6), étant amené dans la zone de travail (A) pour la fabrication de platines d'un deuxième type défini. Le dispositif de découpe (5) présente un dispositif d'entraînement destiné au mouvement de course d'au moins une traverse (7, 8).

14. Procédé selon la revendication 13, une traverse supérieure (8) présentant une première arête de coupe étant déplacée contre une traverse inférieure (7) présentant une deuxième arête de coupe pour la fabrication de platines du deuxième type défini.

15. Procédé selon la revendication 13 ou 14, la traverse supérieure (8) étant déplacée via deux bielles (9) reliées à un arbre à excentrique (10).

16. Procédé selon l'une des revendications 13 à 15, l'arbre à excentrique (10) étant un élément du dispositif d'entraînement et la traverse inférieure (7) étant disposée entre le dispositif d'entraînement et la traverse supérieure (8) .

17. Procédé selon l'une des revendications 13 à 16, la traverse supérieure (8) et la traverse inférieure (7) pivotant d'un axe parallèle au sens de mouvement de coupe de la traverse supérieure (8), avant une coupe due au déplacement de la traverse supérieure (8).

18. Procédé selon l'une des revendications 14 à 17, le dispositif d'entraînement et / ou le dispositif pivotant étant commandé de manière hydraulique.

19. Procédé selon l'une des revendications 14 à 18, les pivotements étant commandés automatiquement.

20. Procédé selon l'une des revendications 14 à 19, l'outil de coupe étant sur un autre plateau coulissant et le plateau coulissant (6) ainsi que l'autre plateau coulissant étant déplacés pour remplacer le dispositif de découpe (5) par l'outil de coupe.

21. Procédé selon l'une des revendications 14 à 20, une liaison hydraulique étant établie entre le dispositif de découpe (5) et un dispositif hydraulique de la presse hydraulique (1) après l'entrée du plateau coulissant (6).
